# EUROPEAN PATENT APPLICATION

(11) **EP 1 837 226 A2**
(43) Date of publication of application: **26.09.2007**
(21) Application number: 07102678.5
(22) Date of filing: 20.02.2007
(51) Int. Cl.: B60K 17/356

(54) **A hydraulic propulsion system for land vehicles**

(30) Priority: 22.03.2006 IT RE20060041
(71) Applicant: Officine Bieffebi S.p.A., 46023 Gonzaga (Mantova) (IT)
(72) Inventor: ManzaIi, Maurizio, 46023, GONZAGA (MANTOVA) (IT)
(74) Representative: Corradini, Corrado

(57) **Abstract**

A hydraulic propulsion system for land vehicles comprises a closed hydraulic system (4), in which a pump group (5, 50), a first hydraulic motor (6) for activating wheels (20) of a fixed axle (2) and a second hydraulic motor group (7) for activating wheels (20) of a steering axle (3) are inserted in series. The pump group (5), the first motor group (6) and the second motor group (7) subdivide the hydraulic circuit (4) into an initial tract (40) connecting the pump group (5) to the first motor group (6), an intermediate tract (41) connecting the first motor group (6) to the second motor group (7), and a terminal tract (42) connecting to the second motor group (7) to the pump group (5). The hydraulic circuit (4) comprises at least an auxiliary branch (80, 800) which connects the intermediate tract (41) with either of the initial tract (40) and the final tract (42), and a differential valve (82, 820) for intercepting the auxiliary branch (80, 800), which differential valve (82, 820) is piloted by the difference between the pressures prevailing in two of the tracts (40, 41, 42) of the hydraulic circuit (4).

## Description

The invention relates to a propulsion system for land vehicles, in agreement with the preamble of claim 1.

At present hydraulic propulsion systems, commonly known as hydrostatic transmissions, are installed on many types of work vehicles thanks to the versatility thereof, the ease of regulation thereof and the substantial freedom of positioning thereof on the vehicles themselves.

Schematically, hydrostatic transmissions are constituted by a closed hydraulic circuit, in which a thrust pump and one or two hydraulic motors are inserted, the motors being mechanically connected to the vehicle wheels.

The pump receives mechanical thrusting power from a generator, typically an internal combustion engine, and transmits the power to the operating fluid circulating in the hydraulic circuit.

Vice versa, the hydraulic motors receive the power from the operating fluid and convert it into mechanical energy to drive the wheels.

The rotation velocity of the hydraulic motors is entirely defined by the ratio between the operating fluid flow crossing them and the cubic capacity of the motors themselves. Thus, rotation velocity can vary only following a variation or an adjustment of the above-mentioned parameters.

The circuit design of a hydrostatic transmission can vary significantly according to the requirements of the specific applications the transmission is destined for.

One of these applications is in the propulsion of gardening vehicles and, in particular, that of lawn mower tractors.

As is known, lawn mowers are generally provided with four wheels, arranged on two independent axles, of which one is fixed and one is a steerable axle.

Also known are lawn mowers with four-wheel drive with mechanical and hydraulic traction.

In the case of lawn mowers provided with four-wheel hydraulic drive, the propulsion system usually comprises a single thrust pump which supplies two distinct motor groups, arranged in series along the hydraulic circuit and singly destined to drive the wheels of a respective axle.

Normally the motor group associated to the fixed axle comprises a single hydraulic motor, mechanically connected to both wheels.

Usually the motor group associated to the steering axle comprises two distinct hydraulic motors arranged in parallel, each of which is mechanically connected to a respective wheel. In this way, the second motor group functions intrinsically as a differential mechanism that when the mower is curving transmits different rotation speeds to the steering axle.

Alternatively the motor group associated to the steering axle can also comprise a single hydraulic motor connected to the wheels via a mechanical differential; while the motor group associated to the fixed axle can comprise two distinct hydraulic motors arranged in parallel, each of which is mechanically connected to a respective wheel.

As the two motor groups are crossed by the same operating fluid flow, the relative hydraulic motors must be of specially measured dimensions so that when the lawn mower moves along a straight direction, the peripheral velocity of the four drive wheels is the same.

This dimensioning implicates, in particular, that the mean of the peripheral velocity of the wheels of the steering axle is equal to the mean of the peripheral velocity of the wheels of the fixed axle, whether following a straight direction or curving.

During curving, however, the wheels of the steering axle must cover, in a same time interval, a mean trajectory which is superior to the mean trajectory of the wheels of the fixed axle.

Thus, the means of the peripheral velocity of the steering wheels should be correspondingly superior to the mean of the peripheral velocity of the wheels of the fixed axle.

The fact that this is prevented by the propulsion system means that the wheels on the fixed axle tend to drag the wheels of the steering axle, which causes the latter to drag on the land.

As is obvious, the dragging phenomenon is very significant as it leads to a rapid deterioration of the wheels of the steering axle, and in the specific case of lawn mowers leads to damage to the lawn being mowed.

In order to obviate this drawback propulsion systems have been developed in which the hydraulic motors are of variable cubic capacity, so that the velocity of the wheels can be varied when the lawn mower is curving.

These solutions, however, require the use of sensors for detecting the operative conditions of the propulsion system (for example speed sensors, pressure sensors or flow rate sensors), as well as complicated and expensive electro-mechanical command panels.

The aim of the present invention is to overcome the above-mentioned drawback in the prior art, by providing a simple, rational and inexpensive solution.

The set aim is attained by the invention, as it is characterised in the claims that follow.

The hydraulic propulsion system of the invention comprises, in general, a closed hydraulic circuit comprising a pump group, a first hydraulic motor group for activating the wheels of the fixed axle, and a second hydraulic motor group for activating the wheels of the steering axle, all in series.

The pump groups, the first motor group and the second motor group substantially subdivide the hydraulic circuit into three tracts: an initial tract which connects the pump group to the first motor group; an intermediate tract which connects the first motor group to the second motor group, and a terminal tract which connects the second motor group to the pump group.

According to the invention, the hydraulic circuit further comprises at least an auxiliary branch which connects the intermediate tract with either of the initial tract or the terminal tract.

Thanks to the auxiliary tract, when the vehicle moves in a curve, the first and the second motor groups can be supplied with different operating fluid flow rates, which enable the wheels of the steering axle to be moved at a mean peripheral velocity which is greater than that of the wheels of the fixed axle, preventing that the wheels of the steering axle from dragging on the ground.

In particular, with the invention the auxiliary branch is intercepted by a differential valve, which is piloted by the pressures existing in two distinct tracts of the hydraulic circuit, of which at least one of the tracts is susceptible to varying the internal pressure thereof according to whether the vehicle is moving in a straight direction or is curving.

In this way, the differential valve is able automatically to manage the passage of the operating fluid internally of the auxiliary branch, according to whether the vehicle is moving in a curve or is moving in a straight direction.

Further characteristics and advantages of the invention will emerge from a reading of the following description, provided by way of non-limiting example with the aid of the figures of the enclosed drawings, in which:
- Figure 1 is a diagram of the hydraulic propulsion system of a lawn mower according to the invention;
- Figure 2 is a circuit diagram of the regulation device of the wheel velocity of the system of figure 1;
- Figure 3 is a diagram of a hydraulic propulsion system of a further embodiment of the invention;
- Figure 4 is a circuit diagram of the regulation device of the wheel velocity of the system of figure 3.

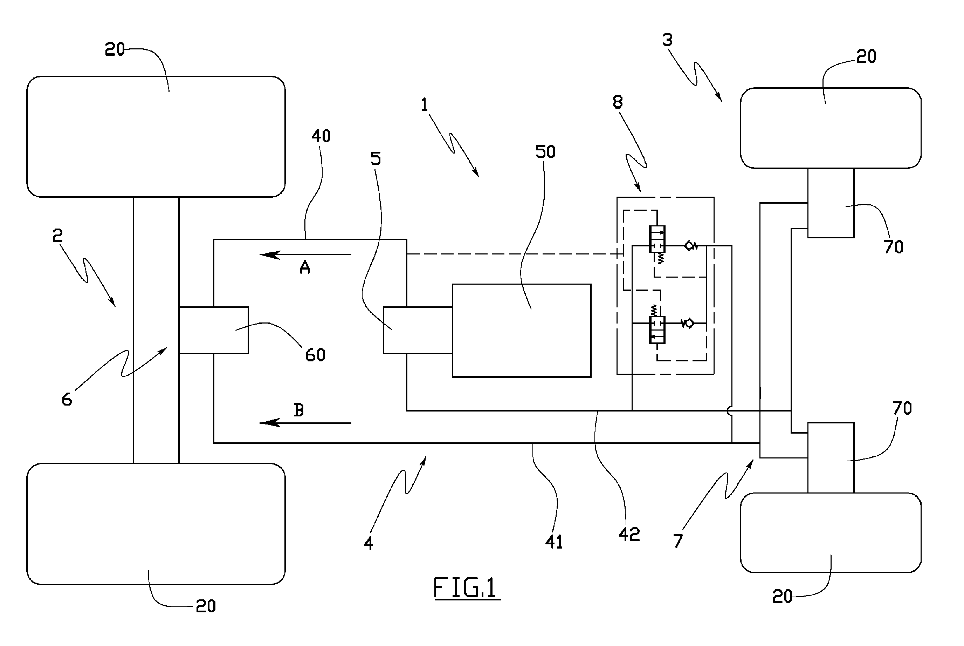

Figure 1 schematically illustrates a lawn-mower tractor 1.

The lawn-mower 1 comprises four drive wheels 20 arranged on two independent axles, of which one is a fixed axle and the other is a steering axle 3.

It is stressed that in the present description it is unimportant which of the two axles, respectively the fixed axle 2 and the steering axle 3, is arranged anteriorly with respect to the orientation of the lawn mower 1.

The lawn mower 1 is driven by a hydraulic propulsion system which comprises a closed hydraulic system 4 in which an operating fluid circulates, typically oil.

A thrust pump 5 is inserted along the hydraulic system 4 to circulate the operating fluid, which pump 5 is mechanically connected to an internal combustion engine 50 from which it receives the mechanical power required for functioning.

In particular, the thrust pump 5 is reversible, in the sense that it enables the operating fluid to be circulated in the hydraulic circuit in both directions.

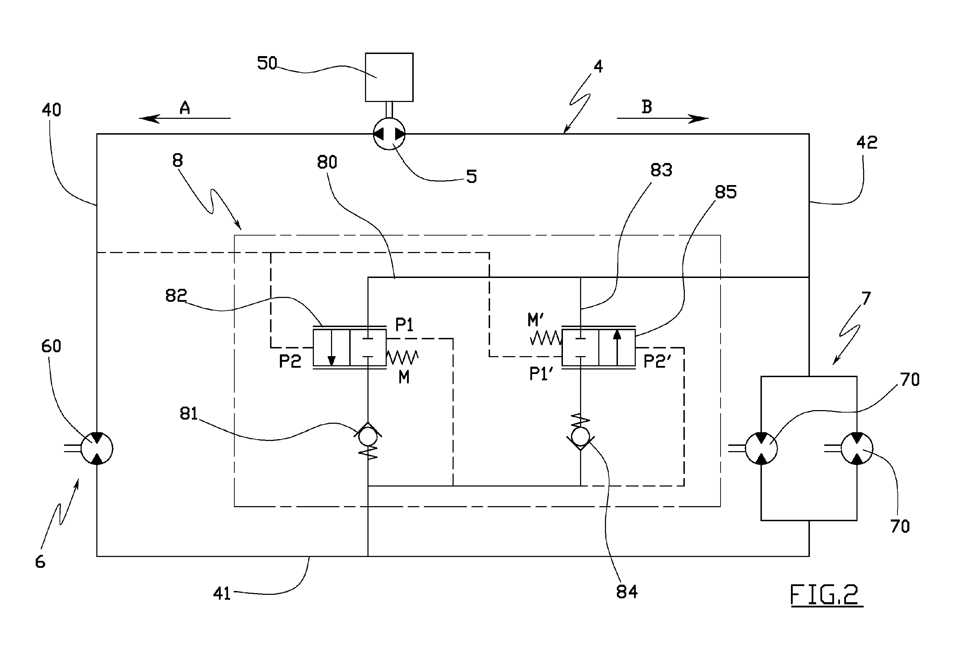

With reference to figures 1 and 2, the pump 5 circulates the operating fluid in an anticlockwise direction A, to move the lawn mower 1 forwards, and in a clockwise direction B to move the lawn mower backwards.

Two motor groups are also inserted along the hydraulic circuit 4, which motor groups are arranged reciprocally in series, a first motor group 6 being associated to the fixed axle 2 and a second motor group 7 being associated to the steering axle 3.

In particular, the fact that the first and second motor groups 6 and 7 are arranged in series gives the advantage that in a case of skidding by one or both the drive wheels 20 of an axle, the drive wheels 20 of the other axle continue to rotate to transmit traction efficiently to the lawn mower 1.

In this way the lawn mower 1 is drivable in any driving condition and on any terrain, which increases the user's safety.

The thrust pump 5, the first motor group 6 and the second motor group 7 sub-divide the hydraulic circuit 4 into three distinct tracts; an initial tract 40 which connects the thrust pump 5 to the first motor group 6, an intermediate tract 41 which connects the first motor group 6 to the second motor group 7, and a terminal tract 42 which connects the second motor group 7 to the thrust pump 5, closing the circuit.

The first motor group 6 comprises a single hydraulic motor 60, which receives power from the operating fluid which circulates in the hydraulic circuit 4, and converts it into mechanical energy for activating the wheels 20 of the fixed axle 2, which is mechanically connected by a usual mechanical transmission.

The second motor group 7 comprises two distinct hydraulic motors 70 which are arranged hydraulically in parallel and are mechanically each connected to a respective wheel 20 of the steering axle 3.

In this way, the second motor group 7 functions intrinsically as a differential device 3 which, when curving, enables the wheels 20 of the steering axle 3 to be moved at different rotation velocities.

Obviously, the functional diagrams of the above-described first 6 and second 7 groups are not the only ones possible, but can be specially modified according to particular or contingent needs without forsaking the ambit of the present invention.

For example, the second motor group 7 might comprise a sole hydraulic motor 70 connected to both the wheels 20 of the steering axle 3 via a usual mechanical-type differential.

Vice versa, the first motor group 6 might comprise two hydraulic motors 60 singly connected to a respective wheel 20 of the fixed axle 2.

The hydraulic propulsion system of the lawn mower 1 comprises a regulation circuit, denoted in its entirety by 8, which controls and regulates the rotation velocity of the wheels 20 in accordance with the drive condition of the lawn mower 1, i.e. according to whether the lawn mower 1 is moving in a straight line or is curving.

As illustrated in figure 2, the regulation circuit 8 comprises an auxiliary branch 80 which hydraulically connects the terminal tract 42 of the hydraulic circuit 4 with the intermediate tract 41 thereof.

The auxiliary branch 80 is intercepted by a usual check valve 81 and a differential valve 82, which are arranged in series with one another.

The check valve 81 prevents operating fluid outflow from the intermediate tract 41 to the terminal tract 42 of the hydraulic circuit 4.

The differential valve 82 is a known-type valve which, piloted by two special command pressures, manages the passage of the operating fluid in the auxiliary branch 80.

Schematically the differential valve 82 comprises a mobile obturator which switches the differential valve 82 between a completely closed configuration and a completely open configuration.

The following act on the obturator: an elastic pre-load force M, usually generated by a spring, which pushes the obturator in a closing direction to close the passage to the operating fluid; a first command pressure P1 which acts in a same direction as the pre-load force M; and a second command pressure P2 which acts in contrast to the preceding forces.

In this way, the equilibrium of the differential valve 82 is given by the equation: P2 = M + P1, and thus the opening and closing of the auxiliary branch 80 are commanded by the difference between the command pressures P2 and P1.

As illustrated in the circuit diagram of figure 2, the differential valve 82 is operatively connected with the initial tract 40 and with the intermediate tract 41 of the hydraulic circuit 4 (see the broken lines).

In particular, the differential valve 82 is piloted by the pressure P1 which prevails in the intermediate tract 41 and by the pressure P2 which prevails in the initial tract 40.

The regulation circuit 8 further comprises a second auxiliary branch 83, in parallel with the first auxiliary branch 80, which hydraulically connects the terminal tract 42 and the intermediate tract 41 of the hydraulic circuit 4.

The second auxiliary branch 83 is also intercepted by a usual check valve 84 and by a differential valve 85 arranged in series.

The check valve 84 prevents flow of operating fluid from the terminal tract 42 to the intermediate tract 41.

The differential valve 85 is of the same type as the differential valve 82, and is piloted by the command pressure P1' prevailing in the initial tract 40 of the hydraulic circuit 4, and by the command pressure P2' which prevails in the intermediate tract 41 (see the broken lines), as well as by an elastic pre-load force M'.

In use, the above-described propulsion system is different according to whether the lawn mower 1 is moving forwards or in reverse.

In forward motion, the thrust pump 5 circulates the operating fluid in an anticlockwise direction A, so that it crosses in series the first motor group 6 and, thereafter, the second motor group 7.

In this way, the pressure of the operating fluid in the hydraulic circuit 4 is at a maximum in the initial tract 40, and is at an intermediate pressure in the intermediate tract 41, and at a minimum pressure in the terminal tract 42.

Owing to the drop in pressure between the initial tract 40 and the intermediate tract 41, the differential valve 85 of the second auxiliary branch 83 is constantly closed, and is not crossed by the operating fluid.

During a displacement of the lawn mower 1 in a straight line, ignoring the inevitable load losses, the pressure drop between the initial tract 40 and the intermediate tract 41 essentially depends on the torque developed by the first motor group 6, while the pressure drop between the intermediate tract 41 and the terminal tract 42 essentially depends on the torque developed by the second motor group 7.

In particular, the pressure drop between the initial tract 40 and the intermediate tract 41 of the hydraulic circuit 4 is equal to the difference between the command pressures P2 and P1 of the differential valve 82, i.e. the quota part of pressure acting on the obturator of the differential valve 82 in contrast with the elastic preload force M.

The preload force M is regulated in order to be lower than the pressure drop, so that the differential valve 82 is constantly open.

For example, the preload force M can be substantially nil (spring absent) or so small as to have the mere function of preventing a too-sharp switching of the valve 82, which otherwise might cause damage to the mobile parts of the valve 82 itself.

In this configuration, all the operating fluid flowing through the intermediate branch 41 crosses the second motor group 7 and reaches the terminal tract 42, and the check valve 81 prevents the operating fluid from running into the first auxiliary branch 80.

In this way, the check valve 81 guarantees that the first and second motor groups 6 and 7 are always crossed by operating fluid, preserving the traction advantages deriving from the connection in series thereof.

In the terminal tract 42, the operating fluid pressure is lower than it was in the intermediate tract 41 ; therefore, notwithstanding the fact that the first auxiliary branch 80 is open, the operating fluid proceeds undisturbed towards the thrust pump 5.

At the moment when the steering is turned, the mean of the peripheral velocities of the wheels 20 of the steering axle 3 is equal to the mean of the peripheral velocities of the wheels of the fixed axle 2.

However, the wheels 20 of the steering axle 3 follow a trajectory on the terrain which is greater than that of the wheels 20 of the fixed axle 2, which tend therefore to drag the wheels 20 of the steering axle 3 on the ground.

This dragging causes an acceleration of the wheels 20 on the steering axle 3, which is transmitted to the hydraulic motors 70 of the second motor group 7.

In this situation, the rotation of the hydraulic motors 70 no longer happens by effect of the operating fluid flow rate crossing them, but by effect of the interaction of the wheels 20 with the terrain.

For this reason the hydraulic motors start functioning substantially as pumps for the operating fluid circulating in the hydraulic circuit 4.

Experts in the field consider that the hydraulic motors 70, in such a situation, become like "pumps", i.e. they aspirate a superior quantity of operating fluid from the intermediate tract 41 of the hydraulic circuit 4 and pump it into the terminal tract 42.

In this way, the pressure in the terminal tract 42 increases with respect to the pressure in the intermediate tract 41.

When the pressure in the terminal tract 42 exceeds the pressure in the intermediate tract 41, a part of the operating fluid flow which is crossing the terminal tract 42 passes internally of the auxiliary branch 80, which is kept open by the differential valve 82, and returns into the intermediate tract 41.

The operating fluid flow rate crossing the auxiliary branch 80 is obviously proportional to the pressure difference between the terminal tract 42 and the intermediate tract 41.

In this way, the second motor group 7 is crossed by a quantity of operating fluid which is superior to the quantity of a normal working rate, and enables the hydraulic motors 70 to rotate more quickly, together with the wheels 20 of the steering axle 3, up to a sufficient velocity to prevent the dragging of the wheels 20 of the steering axle 3 on the ground.

Further, the operating fluid flowing in the first auxiliary branch 80 towards the intermediate tract 41 enables prevention of cavitation.

In the absence of the return flow, the pumping action of the hydraulic motors 70 might reduce the pressure in the intermediate tract 41 up until the vapour tension of the operating fluid is reached, leading to the separation of the gases contained therein.

This phenomenon, known as cavitation, leads to inefficiency of and damage to the hydraulic motors 70, as it causes a rapid erosion of their mobile parts.

The return flow through the auxiliary branch 80 balances the pressures in the intermediate tract 41 and the terminal tract 42, effectively solving this considerable drawback.

During a displacement of the lawn mower 1 in reverse, the thrust pump 5 circulates the operating fluid in the hydraulic circuit 4 in a clockwise direction B, so that it crosses the second motor group 7 and thereafter the first motor group 6.

In this way, the pressure of the operating fluid in the hydraulic circuit 4 is at a maximum in the terminal tract 42, at an intermediate level in the intermediate tract 41, and is at a minimum in the initial tract 40.

In this condition the differential valve 82 in the first auxiliary branch 80 is constantly closed, and the first auxiliary branch 80 is not crossed by operating fluid.

During a displacement of the lawn mower 1 in a straight direction, leaving aside the obvious load losses, the pressure drop between the terminal tract 42 and the intermediate tract 41 essentially depends on the torque developed by the second motor group 7, while the drop in pressure between the intermediate tract 41 and the initial tract 40 essentially depends on the torque developed by the first motor group 6.

In particular, the pressure drop between the intermediate tract 41 and the initial tract 40 of the hydraulic circuit 4 is equal to the difference between the command pressures P2' and P1' of the differential valve 85, i.e. the quota part of pressure which acts on the obturator of the differential valve 85 in contrast with the pre-load force M'.

The preload force M' is regulated in such a way as to be lower than the pressure drop, so that the differential valve 85 maintains the second auxiliary branch 83 constantly open.

For example, the preload force M' can be substantially nil (spring absent) or so small as only to have the function of preventing too sharp a switch of the differential valve 85.

In this configuration, all the operating fluid flowing through the terminal tract 42 is constrained to cross the second motor group 7 and to reach the intermediate tract 41, as the check valve 84 prevents it from running into the second auxiliary branch 83.

In this way, the check valve 84 guarantees that the second and first motor group 7 and 6 are constantly crossed by operating fluid, conserving the traction advantages correlated to the arrangement thereof in series.

As the operating fluid pressure in the intermediate tract 41 is lower than the pressure in the terminal tract 42, although the second auxiliary branch 83 is open, the operating fluid proceeds undisturbed towards the first motor group 6 and towards the thrust pump 5.

When the steering action is begun, the same phenomenon as described above occurs, i.e. the hydraulic motors 70 of the second motor group 7 become "pumps" due to the dragging of the wheels 20 of the steering axle 3 on the ground.

Thus the pressure of the operating fluid in the intermediate tract 41 increases up until it exceeds the pressure in the terminal tract 42.

In this situation, part of the operating fluid which runs through the intermediate tract 41 is recalled, by the pressure difference, into the second auxiliary branch 83 and sent back into the terminal tract 42 of the hydraulic circuit 4.

This means that the second motor group 7 is crossed by an operating fluid flow which is greater than during normal functioning, so as to enable the hydraulic motors 70 and the wheels 20 of the steering axle 3 to turn faster, preventing dragging of the wheels 20 on the ground and also avoiding cavitation effects.

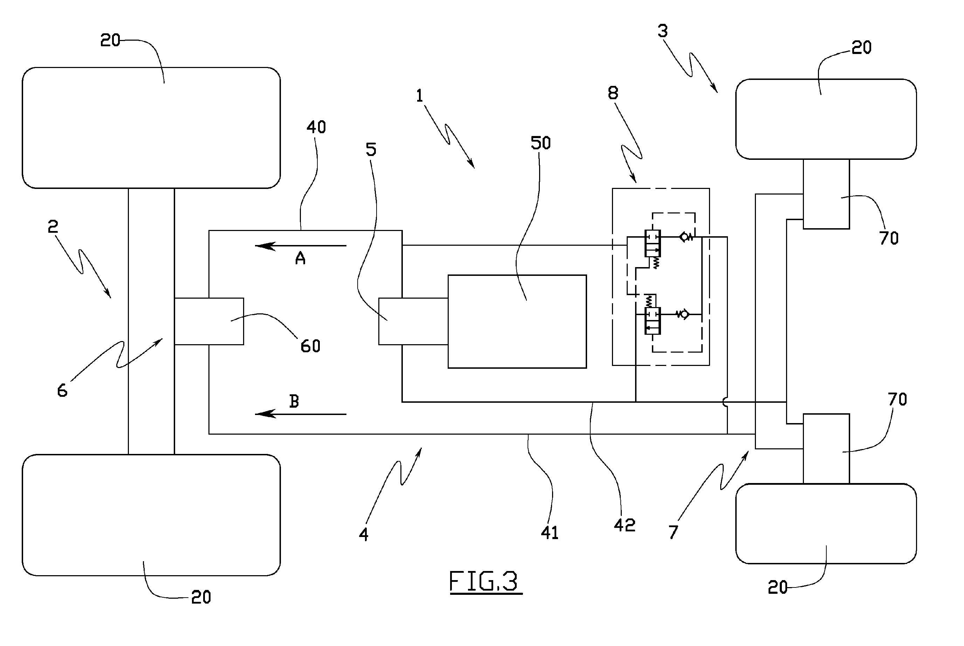

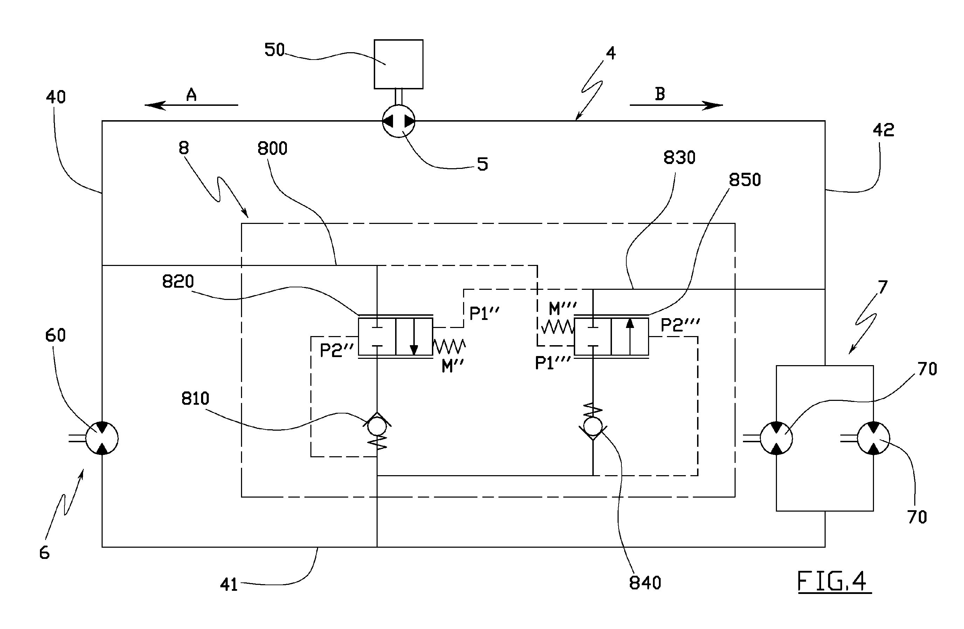

Figures 3 and 4 illustrate an alternative embodiment of the invention, which is different from the first embodiment in the circuit design of the regulation circuit 8.

In the second embodiment, the regulation circuit 8 comprises a first auxiliary branch 800 which hydraulically connects the initial tract 40 of the hydraulic circuit 4 to the intermediate tract 41.

The first auxiliary branch 800 is intercepted by a usual check valve 810 and by a differential valve 820 arranged in series.

The check valve 810 prevents passage of operating fluid from the intermediate tract 41 to the initial tract 40.

The differential valve 820 is alike to the valves described herein above, and is piloted by the pressure P1" of the operating fluid in the terminal tract 42, and by the pressure P2" of the operating fluid in the intermediate tract 41, apart from by an elastic preload force M".

The only difference is that in this case the pressure P1" and the preload force M" act to open the differential valve 820, while the pressure P2" acts to close the valve 820.

The regulation circuit 8 further comprises a second auxiliary branch 830 which hydraulically connects the intermediate tract 41 to the terminal tract 42, which terminal tract 42 is intercepted by a check valve 840 and by a differential valve 850.

The check valve 840 prevents the operating fluid from passing from the terminal tract 42 to the intermediate tract 41.

The differential valve 850 is piloted by the pressure P1"' which prevails in the initial tract 40 and by the pressure P2"' which prevails in the intermediate tract 41, as well as by an elastic preload force M"'.

In particular, the arrangement of the second auxiliary branch 830 and the relative valves 840 and 850 is entirely similar to that of the second auxiliary branch 83 described for the first embodiment of the invention.

During a displacement of the lawn mower 1 in forward motion, the thrust pump 5 circulates the operating fluid in the hydraulic circuit 4 in an anticlockwise direction A.

The pressure in the initial tract 40 is higher than the pressure in the intermediate tract 41, which is in turn higher than the pressure in the terminal tract 42.

In this situation, the differential valve 850 of the second auxiliary branch 830 closes the passage of the operating fluid.

During a displacement of the lawn mower 1 in a straight direction, leaving aside the obvious load losses, the pressure drop between the initial tract 40 and the intermediate tract 41 depends on the torque developed by the first motor group 6, while the pressure drop between the intermediate tract 41 and the terminal tract 42 depends on the torque developed by the second motor group 7.

In particular, the pressure drop between the intermediate tract 41 and the terminal tract 42 of the hydraulic circuit 4 is equal to the difference between the command pressures P2" and P1" of the differential valve 820, i.e. the quota part of the pressure acting on the obturator of the differential valve 820, in contrast with the preload force M".

The preload force M" is regulated in such a way as to be lower than or equal to the above-mentioned pressure drop, so that the auxiliary branch 800 remains normally closed.

When the steering operation starts, the previously-described phenomenon occurs, in which the hydraulic motors 70 of the second motor group 7 start "pumping".

The pressure in the terminal tract 42 of the hydraulic circuit increases, and the difference with the pressure in the intermediate tract 41 is consequently reduced.

When the pressure difference equals the preload force M", the differential valve 820 begins to open the first auxiliary branch 800, enabling a part of the operating fluid to pass and run into the initial tract 40 directly towards the intermediate tract 41, by-passing the first motor group 6.

In this way, the first motor group 6 is crossed by a smaller operating fluid flow than during normal functioning, which slows and reduces the rotation velocity of the wheels 20 of the fixed axle 2, preventing the wheels 20 of the steering axle 3 from dragging on the ground.

The quantity of operating fluid by-passing the first motor group 6 obviously depends on the degree of opening of the differential valve 820, which in turn depends on the difference between the pressure in the intermediate tract 41 and the terminal tract 42.

In this configuration, then, the differential valve 820 behaves as a proportional valve which actively regulates the by-pass flow rate of the operating fluid, enabling correct functioning of the propulsion system in all conditions.

During a displacement of the lawn mower 1 in reverse direction, the pressure of the operating fluid in the terminal tract 42 is higher than the operating fluid pressure in the intermediate tract 41, which is in turn higher than the pressure in the initial tract 40.

In this situation, all the operating fluid flowing through the terminal tract 42 is constrained to cross the second motor group 7, as the check valve 840 prevents it from flowing into the second auxiliary branch 830.

Further all the operating fluid flowing in the intermediate tract is subsequently constrained also to flow through the first motor group 6 as notwithstanding the fact that the differential valve 820 is open, the greater pressure in the intermediate tract 41 with respect to the initial tract 40 keeps the check valve 810 closed, preventing the fluid from flowing in the first auxiliary branch 800.

In this way the check valves 840 and 810 guarantee that the second and first motor groups 7 and 6 are always crossed by operating fluid, conserving the traction advantages correlated to the arrangement thereof in series.

At the same time, the differential valve 850 is open; therefore, when the steering operation starts, the check valve 850 allows part of the operating fluid to pass into the second auxiliary branch 830 in a completely similar way to what was described for the first embodiment, which can be referred to for further details.

## Claims

1. A hydraulic propulsion system for land vehicles comprising a closed hydraulic system (4), in which a pump group (5, 50), a first hydraulic motor (6) for activating wheels (20) of a fixed axle (2) and a second hydraulic motor group (7) for activating wheels (20) of a steering axle (3) are inserted in series,
the pump group (5), the first motor group (6) and the second motor group (7) subdividing the hydraulic circuit (4) into an initial tract (40) connecting the pump group (5) to the first motor group (6), an intermediate tract (41) connecting the first motor group (6) to the second motor group (7), and a terminal tract (42) connecting to the second motor group (7) to the pump group (5),
**characterised in that** the hydraulic circuit (4) comprises at least an auxiliary branch (80, 800) which connects the intermediate tract (41) with either of the initial tract (40) and the final tract (42), and a differential valve (82, 820) for intercepting the auxiliary branch (80, 800), which differential valve (82, 820) is piloted by a difference between pressures prevailing in two of the tracts (40, 41, 42) of the hydraulic circuit (4).

2. The system of claim 1, **characterised in that** the auxiliary branch (80) connects the intermediate tract (41) of the hydraulic circuit (4) with the terminal tract (42).

3. The system of claim 2, **characterised in that** the differential valve (82) is piloted by the difference between the pressure (P1) that prevails in the intermediate tract (41) and the pressure (P2) that prevails in the initial tract (40).

4. The system of claim 3, **characterised in that** the differential valve (82) is configured in such a way as to open the auxiliary branch (80) when a difference between the pressure (P2) in the initial tract (40) and the pressure (P1) in the intermediate tract (41) exceeds a predetermined threshold level (M).

5. The system of claim 4, **characterised in that** the threshold level (M) is lower than a pressure drop between the initial tract (40) and the intermediate tract (41) due to the presence of the first motor group (6).

6. The system of claim 5, **characterised in that** the threshold level (M) is nil.

7. The system of claim 2, **characterised in that** the auxiliary branch (80) is intercepted by at least a check valve (81) which prevents passage of operating fluid in a direction going from the intermediate tract (41) to the terminal tract (42).

8. The system of claim 1, **characterised in that** the auxiliary branch (800) connects the intermediate tract (41) to the initial tract (40).

9. The system of claim 8, **characterised in that** the differential valve (820) is piloted by the difference between the pressure (P2") which prevails in the intermediate tract (41) and the pressure (P1") which prevails in the terminal tract (42).

10. The system of claim 9, **characterised in that** the differential valve (820) is configured in such a way as to open the auxiliary branch (800) when the difference between the pressure (P2") in the intermediate tract (41) and the pressure (P1") in the terminal tract (42) is lower than a predetermined threshold level (M").

11. The system of claim 10, **characterised in that** the threshold level (M") is lower than or equal to the pressure drop between the intermediate tract (41) and the terminal tract (42) due to the presence of the second motor group (7).

12. The system of claim 10, **characterised in that** the threshold level (M") is established by an elastic preload element of the differential valve (820).

13. The system of claim 8, **characterised in that** the auxiliary branch (800) is intercepted by at least a check valve (810) which prevents passage of operating fluid in a direction going from the intermediate tract (41) to the initial tract (40).

14. The system of claim 1, **characterised in that** the hydraulic circuit (4) comprises a further auxiliary branch (83, 830) which connects the intermediate tract (41) with either of the initial tract (40) and the final tract (42), and a further differential valve (85, 850) which intercepts the further auxiliary branch (83, 830), which is piloted by the difference between the pressures which prevail in two of the initial tract (40), the intermediate tract (41) and the final tract (42) of the hydraulic circuit (4).

15. The system of claim 14, **characterised in that** the further auxiliary branch (83, 830) connects the intermediate tract (41) to the terminal tract (42).

16. The system of claim 15, **characterised in that** the further differential valve (85, 850) is piloted by the difference between the pressure (P2', P2"') which prevails in the intermediate tract (41) and the pressure (P1', P1"') which prevails in the initial tract (40).

17. The system of claim 16, **characterised in that** the further differential valve (85, 850) is configured in such a way as to open the further auxiliary branch (83, 830) when the difference between the pressure (P2', P2"') in the intermediate tract (41) and the pressure (P1', P1"') in the initial tract (40) is greater than a predetermined threshold level (M', M"').

18. The system of claim 17, **characterised in that** the threshold value (M', M"') is lower than the pressure drop between the initial tract (40) and the intermediate tract (41) due to the presence of the first motor group (6).

19. The system of claim 18, **characterised in that** the threshold level (M', M"') is nil.

20. The system of claim 15, **characterised in that** the further auxiliary branch (83, 830) is intercepted by at least a check valve (84, 840) which prevents passage of operating fluid in a direction going from the terminal tract (42) to the intermediate tract (41).

21. A land vehicle comprising a hydraulic propulsion system of any one of the preceding claims.
